# EUROPEAN PATENT APPLICATION

(11) **EP 3 686 721 A1**
(43) Date of publication of application: **29.07.2020**
(21) Application number: 19205533.3
(22) Date of filing: 28.10.2019
(51) Int. Cl.: G06F 3/045

(54) **DECORATIVE CONDUCTIVE FILM, RESISTANCE FILM TYPE TOUCH PANEL, AND ELECTRONIC DEVICE**

(30) Priority: 23.01.2019 JP 2019009493
(71) Applicant: Oike&Co., Ltd., Kyoto-shi, Kyoto 600-8461 (JP)
(72) Inventor: SATO, Noriyuki, Kyoto, 601-8122 (JP); NAKAJIMA, Yoshihiro, Kyoto, 601-8122 (JP)
(74) Representative: Botti, Mario

(57) **Abstract**

To provide a decorative conductive film, which is capable of simplifying manufacturing steps and has a small thickness to enable reduction in input load when used for a resistance film type touch panel, a resistance film type touch panel, and an electronic device. The decorative conductive film includes: a transparent resin film; a decorative layer and a hard coat layer provided on one surface of the transparent resin film; and a conductive layer provided on another surface of the transparent resin film, wherein the decorative conductive film is to be used for a resistance film type touch panel.

## Description

### TECHNICAL FIELD

The present invention relates to a decorative conductive film, a resistance film type touch panel, and an electronic device. More in detail, the present invention relates to a decorative conductive film, which is capable of simplifying manufacturing steps and has a small thickness to enable reduction in input load when used for a resistance film type touch panel, a resistance film type touch panel, and an electronic device.

### BACKGROUND OF THE INVENTION

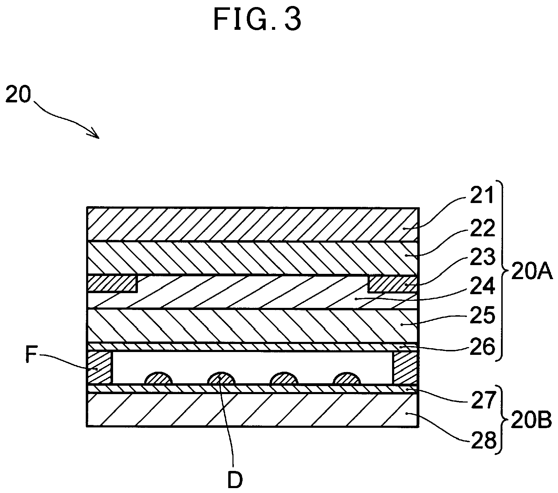

Hitherto, there has been known a resistance film type touch panel which includes an upper electrode including an ITO (indium tin oxide) film, a decoration-printed hard coat layer (icon sheet) provided on the ITO film, and an optical clear adhesive (OCA) for affixing the ITO film and the icon sheet to each other. FIG. 3 is a schematic sectional view for illustrating a layer configuration of a related-art touch panel. As illustrated in FIG. 3, a related-art resistance film type touch panel 20 has the following configuration. An icon sheet which is formed of a hard coat layer 21, a transparent resin film 22, and a decorative layer 23 is affixed to a transparent base member 25 and a conductive layer 26 containing ITO through intermediation of an OCA 24 to form an upper electrode 20A. A conductive layer 27 containing ITO and a transparent base member 28 form a lower electrode 20B. The upper electrode 20A and the lower electrode 20B are arranged apart from each other by a frame F. Dot spacers D are provided on the lower electrode 20B. Moreover, in Japanese Patent Application Publication No. 2012-22210, there is disclosed a technique of charging an ultraviolet curing resin so that air bubbles are less liable to be generated at the time of affixing an OCA to an icon sheet.

### SUMMARY OF THE INVENTION

However, in the related-art resistance film type touch panel including an image display panel disclosed in Japanese Patent Application Publication No. 2012-22210, the icon sheet and an upper electrode are affixed to each other through use of the OCA, and hence manufacturing steps are complicated. Moreover, a touch panel to be obtained has a large thickness and requires a large input load, with the result that the touch panel has less operability.

The present invention has been made in view of such related-art invention, and has an object to provide a decorative conductive film, which is capable of simplifying manufacturing steps and has a small thickness to enable reduction in input load when used for a resistance film type touch panel, a resistance film type touch panel, and an electronic device.

As a result of extensive studies, the inventors of the present invention have found that the above-mentioned problem may suitably be solved by providing a decorative layer and a hard coat layer on one surface of a transparent resin film and providing a conductive layer on another surface, and have completed the present invention. That is, a decorative conductive film, a resistance film type touch panel, and an electronic device according to the present invention which solve the above-mentioned problem mainly include the following configurations.
(1) A decorative conductive film, comprising: a transparent resin film; a decorative layer and a hard coat layer provided on one surface of the transparent resin film; and a conductive layer provided on another surface of the transparent resin film, wherein the decorative conductive film is to be used for a resistance film type touch panel.
   According to such a configuration, on the one surface of the decorative conductive film, the decorative layer is directly printed on the transparent resin film, and the hard coat layer is provided so as to cover the decorative layer. Moreover, on the another surface of the decorative conductive film, the conductive layer such as an ITO film is provided. Therefore, the decorative conductive film can be produced as one composite laminate base member, and it is not essentially required that a separate conductive resin film and an OCA for affixing the conductive resin film be provided. Therefore, with regard to the decorative conductive film, processing steps for affixing those members may be simplified. Moreover, the decorative conductive film has a small thickness. Therefore, the decorative conductive film is small in weight and can be reduced in input load required when used for a resistance film type touch panel.
(2) The decorative conductive film according to (1), wherein the transparent resin film includes: a decorative portion in which the decorative layer is provided; and a non-decorative portion in which the decorative layer is not provided, wherein the hard coat layer includes: a first region covering the decorative portion; and a second region covering the non-decorative portion, and wherein the first region has a pencil hardness equal to or higher than H.
   According to such a configuration, the decorative conductive film is excellent in shock resistance and friction resistance.
(3) The decorative conductive film according to (1) or (2), wherein the conductive layer has a sheet resistance value of from 10 Ω/sq. to 1,000 Ω/sq
   According to such a configuration, the decorative conductive film is excellent in sensor sensitivity when used for a touch panel.
(4) The decorative conductive film according to any one of (1) to (3), wherein the decorative conductive film has a thickness of from 50 µm to 500 µm, and wherein the decorative film has a total light transmittance in a thickness direction (excluding a position at which the decorative layer is provided) equal to or higher than 80%.
   According to such a configuration, the decorative conductive film is small in weight and is less liable to cause curling, and hence can easily be handled. Moreover, the decorative conductive film is small in input load and excellent in visibility when used for a touch panel and an electronic device.
(5) A resistance film type touch panel, comprising: an upper electrode including the decorative conductive film of any one of (1) to (4); a lower electrode; and a frame configured to separate the upper electrode and the lower electrode from each other.
   According to such a configuration, the touch panel is capable of simplifying manufacturing steps therefor, and is small in thickness and weight, thereby being capable of reducing an input load.
(6) An electronic device, comprising the resistance film type touch panel of (5).
   According to such a configuration, the electronic device is capable of simplifying manufacturing steps therefor, and is small in thickness and weight, thereby being capable of reducing an input load.
   According to the present invention, a decorative conductive film, which is capable of simplifying manufacturing steps and has a small thickness to enable reduction in input load when used for a resistance film type touch panel, a resistance film type touch panel, and an electronic device can be provided.

### BRIEF DESCRIPTION OF THE DRAWINGS

FIG. 1 is a schematic sectional view for illustrating a layer configuration of a decorative conductive film according to one embodiment of the present invention.
FIG. 2 is a schematic sectional view for illustrating a layer configuration of a touch panel according to one embodiment of the present invention.
FIG. 3 is a schematic sectional view for illustrating a layer configuration of a related-art touch panel.

### DETAILED DESCRIPTION

### <Decorative Conductive Film>

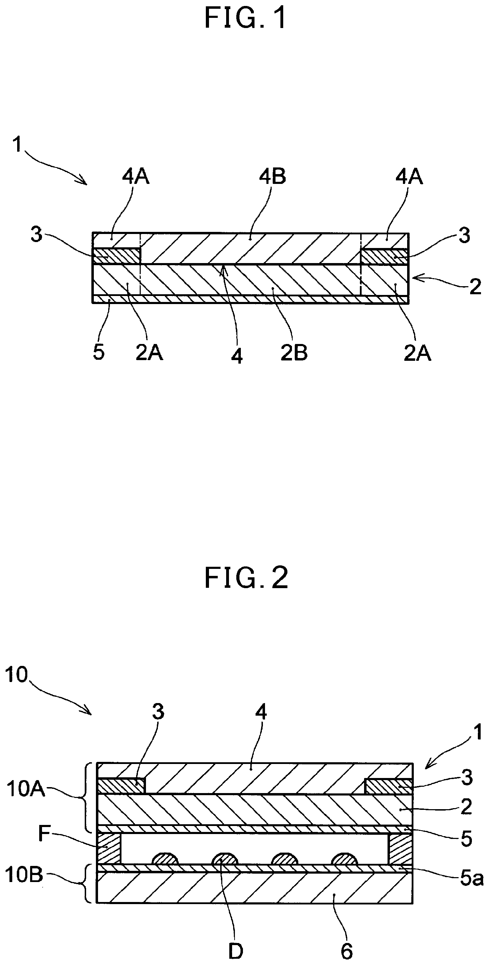

FIG. 1 is a schematic sectional view for illustrating a layer configuration of a decorative conductive film 1 according to one embodiment of the present invention. The decorative conductive film 1 according to the present embodiment includes: a transparent resin film 2; a decorative layer 3 and a hard coat layer 4 provided on one surface of the transparent resin film 2; and a conductive layer 5 provided on another surface of the transparent resin film 2. The decorative conductive film 1 is to be used for a resistance film type touch panel. Now, description is made of respective configurations.

### (Transparent Resin Film 2)

The transparent resin film 2 is not particularly limited. For example, the transparent resin film 2 is a synthetic resin film made of polyethylene terephthalate (PET), polyester (PE), polycarbonate (PC), polystyrene (PS), polyimide (PI), cycloolefin polymer (COP), or acrylic resin (PMMA). The transparent resin film 2 may be transparent paper made of, for example, cellulose nanofibers.

A thickness of the transparent resin film 2 is not particularly limited. For example, it is preferred that the thickness of the transparent resin film 2 be equal to or larger than 20 µm, more preferably equal to or larger than 100 µm. Moreover, it is preferred that the thickness of the transparent resin film 2 be equal to or smaller than 400µm, more preferably equal to or smaller than 200 µm. When the thickness of the transparent resin film 2 falls within the range described above, the decorative conductive film 1 is excellent in stiffness and transparency.

### (Decorative Layer 3)

The decorative layer 3 is provided on one surface of the transparent resin film 2. In the present embodiment, the decorative layer 3 is, for example, a black frame formed by printing or an icon always displaying symbols, characters, or patterns on a screen. A material forming the decorative layer 3 is not particularly limited. Examples of the material forming the decorative layer 3 include various black pigments including: carbon-based black pigments and titanium-based black pigments such as carbon black, graphite, and carbon nanotube (CNT); and oxide-based black pigments being composite oxides of iron, chromium, and zinc. The decorative layer 3 may be formed by dispersing black pigments in a resin. Moreover, besides the black pigments for producing the black frame, a material forming the decorative layer 3 may be, for example, pigments of various colors and metal pigments for achieving various chromatic colors such as white color and metallic color. Through use of those materials, for example, decorative patterns such as a metallic pattern and a wood pattern may be produced on the decorative layer 3.

A thickness of the decorative layer 3 is not particularly limited. For example, it is preferred that the thickness of the decorative layer 3 be equal to or larger than 2 µm, more preferably equal to or larger than 5 µm. Moreover, it is preferred that the thickness of the decorative layer 3 be equal to or smaller than 50 µm, more preferably equal to or smaller than 20 µm. When the thickness of the decorative layer 3 falls within the range described above, the decorative conductive film 1 can easily be manufactured, and is likely to block light emitted from a display with high efficiency when used for an electronic device.

A method of forming the decorative layer 3 is not particularly limited. For example, the decorative layer 3 may be formed on the transparent resin film 2 by, in the case of the metallic pattern, a physical vapor deposition (PVD) such as vapor deposition or sputtering, or a printing method such as gravure printing, screen printing, or inkjet printing using a metallic pattern pigment, or by, in the case of the wood pattern or the carbon pattern, a printing method such as gravure printing, screen printing, or inkjet printing using pigments of various colors. Moreover, the decorative layer 3 may be formed by a transfer method of transferring the decoration. In the case of performing the screen printing, the screen printing may be performed one time or two times or more. When the screen printing is performed two times or more, for example, formation of pinholes is likely to be prevented in the decorative conductive film 1.

In the decorative conductive film 1 according to the present embodiment, the transparent resin film 2 includes a part having the decorative layer 3 provided thereon (decorative portion 2A) and a part having no decorative layer 3 provided thereon (non-decorative portion 2B).

### (Hard Coat Layer 4)

The hard coat layer 4 is a member used on an uppermost surface of the decorative conductive film 1. The hard coat layer 4 includes, on the decorative layer 3 described above, a first region 4A covering the decorative portion 2A and a second region 4B covering the non-decorative portion 2B. In the hard coat layer 4, a thickness of the first region 4A is smaller than a thickness of the second region 4B. Therefore, a surface hardness of the first region 4A tends to be smaller than a surface hardness of the second region 4B. In the present embodiment, it is preferred that the first region 4A of the hard coat layer 4 have a pencil hardness equal to or higher than H. With this configuration, the hard coat layer 4 may have such a hard coat property (shock resistance or wear resistance) that prevents flaws when a finger or an input tool (for example, pen) is used. Moreover, the hard coat layer 4 is capable of sufficiently protecting the decorative layer 3 and is less liable to damage the decorative layer 3. In the present embodiment, the pencil hardness may be measured by conducting a surface hardness test based on JIS K 5600-5-4.

A resin material forming the hard coat layer 4 is not particularly limited. Examples of the resin material forming the hard coat layer 4 include: thermosetting resins such as a polyester-based resin, an acryl-based resin, a polyurethane-based resin, and an epoxy-based resin; and photosetting resins (acryl-based resin and epoxy-based resin). It is preferred that, among those resins, the resin material forming the hard coat layer 4 be the photosetting resin because the photosetting resin requires a short curing time and has an excellent hard coat property. It is more preferred that the resin material forming the hard coat layer 4 be urethane acrylate. Moreover, when such a resin material is used, the hard coat layer 4 can easily achieve the pencil hardness described above, and the decorative conductive film 1 to be obtained is less liable to cause, for example, curling.

A method of forming the hard coat layer 4 is not particularly limited. For example, the hard coat layer 4 may be formed on the transparent resin film 2, which has the decorative layer 3 formed thereon, by gravure coating, die coating, dipping, or screen printing.

A thickness of the hard coat layer 4 is not particularly limited. It is preferred that the thickness of the hard coat layer 4 in the first region 4A be equal to or larger than 0.5 µm, more preferably equal to or larger than 1.0 µm. Moreover, it is preferred that the thickness of the hard coat layer 4 in the first region 4A be equal to or smaller than 20 µm, more preferably equal to or smaller than 10 µm. Moreover, it is preferred that a thickness of the hard coat layer 4 in the second region 4B be equal to or larger than 1 µm, more preferably equal to or larger than 2 µm. Moreover, it is preferred that the thickness of the hard coat layer 4 in the second region 4B be equal to or smaller than 30 µm, more preferably equal to or smaller than 20 µm. When the thicknesses of the hard coat layer 4 fall within the ranges described above, the decorative conductive film 1 has a smaller step between the decorative layer 3 and the transparent resin film 2, and a sufficient surface hardness is likely to be given thereto. Moreover, the resin material forming the hard coat layer 4, when applied so as to cover the decorative layer 3 and the transparent resin film 2, is less liable to include air bubbles at the step portion between the decorative layer 3 and the transparent resin film 2, and is likely to form the hard coat layer 4 without any gap. Further, the hard coat layer 4 is excellent in light transmissivity. Therefore, the decorative conductive film 1 is excellent in visibility when used for a touch panel and an electronic device.

### (Conductive Layer 5)

A material forming the conductive layer 5 is not particularly limited. Examples of the material forming the conductive layer 5 include ITO and indium oxide-based substances such as indium zinc oxide (IZO). Moreover, those indium oxide-based substances may be crystallized by, for example, heat treatment or radical treatment in order to improve conductivity.

A sheet resistance value of the conductive layer 5 is not particularly limited. For example, it is preferred that the sheet resistance value be equal to or larger than 10 92/sq., more preferably equal to or larger than 100 92/sq. Moreover, it is preferred that the sheet resistance value be equal to or smaller than 1,000 92/sq., more preferably equal to or smaller than 500 Ω/sq. When the sheet resistance value falls within the range described above, the decorative conductive film 1 is excellent in sensor sensitivity when used for a touch panel. Moreover, the thickness of the conductive layer 5 is set to a suitable thickness, and hence the decorative conductive film 1 is excellent in visibility when used for a touch panel and an electronic device. In the present embodiment, the sheet resistance value is a resistance value per unit area (1 cm square), which can be measured by a four-terminal four-point probe method through use of a low resistivity meter (Loresta MCP-T370, manufactured by Mitsubishi Chemical Analytech Co., Ltd.).

A method of adjusting the sheet resistance value is not particularly limited. For example, the sheet resistance value may suitably be adjusted within the range described above by changing the thickness of the conductive layer.

A thickness of the conductive layer 5 is not particularly limited. For example, it is preferred that the thickness of the conductive layer 5 be equal to or larger than 5 nm, more preferably equal to or larger than 10 nm. Moreover, it is preferred that the thickness of the conductive layer 5 be equal to or smaller than 100 nm, more preferably equal to or smaller than 50 nm. When the thickness of the conductive layer 5 falls within the range described above, the decorative conductive film 1 has excellent conductivity, and is excellent in visibility when used for a touch panel and an electronic device.

A method of forming the conductive layer 5 is not particularly limited. For example, the conductive layer 5 can be formed on another surface of the transparent resin film 2 (surface opposite to the surface having the decorative layer 3 and the hard coat layer 4 formed thereon) by a PVD method such as a vacuum vapor deposition method or a sputtering method, a chemical vapor deposition (CVD) method, die coating, gravure coating, or dip coating.

Returning to description of the entire decorative conductive film 1, a thickness of the decorative conductive film 1 is not particularly limited. For example, it is preferred that the thickness of the decorative conductive film 1 be equal to or larger than 50 µm, more preferably equal to or larger than 100 µm. Moreover, it is preferred that the thickness of the decorative conductive film 1 be equal to or smaller than 500 µm, more preferably equal to or smaller than 300 µm. When the thickness of the decorative conductive film 1 falls within the range described above, the decorative conductive film 1 is small in weight and is less liable to cause curling, and thus can easily be handled. Moreover, the decorative conductive film 1 has suitable flexibility. Therefore, when a touch panel described later is produced, malfunction of the touch panel due to excessive flexure of the decorative conductive film is likely to be prevented.

It is preferred that a total light transmittance of the decorative conductive film 1 in a thickness direction (excluding a position at which the decorative layer 3 is provided) be equal to or higher than 80%, more preferably equal to or higher than 85%. An upper limit of the total light transmittance of the decorative conductive film 1 in the thickness direction is not particularly limited. When the total light transmittance of the decorative conductive film 1 falls within the range described above, the decorative conductive film 1 is small in input load and is excellent in visibility when used for a touch panel and an electronic device. In the present embodiment, the total light transmittance can be measured by a test method for a total light transmittance of a plastic transparent material (JIS K 7361-1) through use of a hazemeter (NDH7000SP, manufactured by NIPPON DENSHOKU INDUSTRIES Co., LTD).

The decorative conductive film 1 according to the present embodiment is to be used for a resistance film type touch panel. That is, the resistance film type touch panel may be produced through use of the decorative conductive film 1 as an upper electrode.

As described above, according to the decorative conductive film 1 of the present embodiment, on the one surface of the decorative conductive film 1, the decorative layer 3 is directly printed on the transparent resin film 2, and the hard coat layer 4 is provided so as to cover the decorative layer 3. Moreover, on the another surface of the decorative conductive film 1, the conductive layer 5 such as an ITO film is provided. Therefore, the decorative conductive film 1 can be produced as one composite laminate base member, and it is not required that a separate conductive resin film and an OCA for affixing the conductive resin film be provided. Therefore, with regard to the decorative conductive film 1, manufacturing steps such as processing steps for affixing those members may be simplified. Moreover, the decorative conductive film 1 has a small thickness. Therefore, the decorative conductive film 1 is small in weight and can be reduced in input load required when used for a resistance film type touch panel.

In the embodiment described above, illustration is given of the decorative conductive film in which the decorative layer and the hard coat layer are directly provided on the one surface of the transparent resin film. Alternatively, the decorative conductive film according to the present invention may include, between the transparent resin film and the hard coat layer and between the transparent resin film and the decorative layer, for example, an adhesion layer for improving adhesiveness, an optical adjustment layer for improving light transmissivity or adjusting a color tone, or an underlayer for preventing precipitation of oligomer from the transparent resin film.

Moreover, in the embodiment described above, illustration is given of the decorative conductive film in which the conductive layer is directly provided on the another surface of the transparent resin film. Alternatively, the decorative conductive layer according to the present invention may include, between the transparent resin film and the conductive layer, for example, an adhesion layer for improving adhesiveness, an optical adjustment layer for improving light transmissivity or adjusting a color tone, an underlayer for preventing precipitation of oligomer from the transparent resin film, or an anti-Newton ring layer as a countermeasure against a Newton ring.

Further, various characteristics such as fingerprint-proof characteristic, anti-dazzle characteristic, low-reflection characteristic, and anti-bacterial characteristic may be given to the hard coat layer. Those characteristics may be given by coating the hard coat layer with effective substances for giving those characteristics, or by mixing those effective substances into the resin material forming the hard coat layer at the time of forming the hard coat layer. Moreover, those characteristics may be given by laminating the effective substances.

Moreover, in the embodiment described above, description is made of forming each layer in the decorative conductive film. Meanwhile, in place of the methods described above, with regard to the decorative conductive film according to the present invention, for example, at the time of forming the hard coat layer, the decorative layer, and the conductive layer on the transparent resin film, those layers may be laminated in a roll-to-roll method, or may be laminated after cutting those layers into sheets having a predetermined size.

### <Resistance Film Type Touch Panel>

FIG. 2 is a schematic sectional view for illustrating a layer configuration of a resistance film type touch panel 10 (hereinafter referred to as "touch panel 10") according to one embodiment of the present invention. The touch panel 10 according to the present embodiment includes an upper electrode 10A including the decorative conductive film 1 described above, a lower electrode 10B, and a frame F configured to separate the upper electrode 10A and the lower electrode 10B from each other. Now, description is made of each of the upper electrode 10A, the lower electrode 10B, and the frame F.

The upper electrode 10A is formed of the decorative conductive film 1 described above.

Meanwhile, the lower electrode 10B is formed of a transparent base member 6 and a conductive layer 5a formed on the transparent base member 6. On a surface of the conductive layer 5a of the lower electrode 10B, there are provided dot spacers D for identifying a position operated by a user at the time of operation of the touch panel.

The dot spacers D are parts which are provided to prevent short circuit between the upper electrode 10A and the lower electrode 10B, and are each made of a non-conductive material. A method of providing the dot spacers D is not particularly limited. For example, the dot spacers D may be formed by a photolithography method, a screen printing method, or an inkjet printing method.

The transparent base member 6 is not particularly limited. For example, the transparent base member 6 is formed of various transparent resin sheets or glass. A thickness of the transparent base member 6 is not particularly limited. For example, it is preferred that the thickness of the transparent base member 6 be equal to or larger than 0.3 mm, more preferably equal to or larger than 0.5 mm. Moreover, it is preferred that the thickness of the transparent base member 6 be equal to or smaller than 3.0 mm, more preferably equal to or smaller than 2.0 mm.

The conductive layer 5a is similar to the conductive layer 5 described above in the embodiment of the decorative conductive film 1. A method of forming the conductive layer 5a is not particularly limited. For example, the conductive layer 5a can be formed on the transparent base member 6 by a PVD method such as a vacuum vapor deposition method or a sputtering method, a CVD method, die coating, gravure coating, or dip coating.

The upper electrode 10A and the lower electrode 10B are fixed so as to be separated apart from each other by frame F. A material forming the frame F is not particularly limited. Examples of the material forming the frame F include a binding agent, an adhesive, or a double-stick tape having an insulating property.

In the touch panel 10 according to the present embodiment, the decorative conductive film 1 being the upper electrode 10A can be produced as one composite laminate base member as described above, and it is not required that a separate conductive resin film and an OCA for affixing the conductive resin film be provided. Therefore, the touch panel 10 using such decorative conductive film 1 is capable of simplifying manufacturing steps therefor, and is small in thickness and weight, thereby being capable of reducing an input load.

Thus, the touch panel 10 according to the present embodiment is suitable as a touch panel for various electronic devices. Examples of the electronic device include a vehicle instrumental panel (for example, a car navigation system), an electronic table for a home electric appliance, a PC device, a mobile device (for example, smartphone and tablet terminal), an amusement device, a game device, an ATM, a ticket vending machine, various industrial devices, and medical devices. When the touch panel 10 including the decorative conductive film 1 described above is used for touch panels of those electronic devices, the electronic device is capable of simplifying manufacturing steps therefor, and is small in thickness and weight, thereby being capable of reducing an input load.

### Reference Signs List

- 1: decorative conductive film
- 2: transparent resin film
- 2A: decorative portion
- 2B: non-decorative portion
- 3: decorative layer
- 4: hard coat layer
- 4A: first region
- 4B: second region
- 5, 5a: conductive layer
- 6: transparent base member
- 10: touch panel
- 10A: upper electrode
- 10B: lower electrode
- 20: touch panel
- 20A: upper electrode
- 20B: lower electrode
- 21: hard coat layer
- 22: transparent resin film
- 23: decorative layer
- 24: OCA
- 25: transparent base member
- 26: conductive layer
- 27: conductive layer
- 28: transparent base member
- D: dot spacer
- F: frame

## Claims

1. A decorative conductive film, comprising:
a transparent resin film;
a decorative layer and a hard coat layer provided on one surface of the transparent resin film; and
a conductive layer provided on another surface of the transparent resin film,
wherein the decorative conductive film is to be used for a resistance film type touch panel.

2. The decorative conductive film according to claim 1, wherein the transparent resin film includes:
a decorative portion in which the decorative layer is provided; and
a non-decorative portion in which the decorative layer is not provided,
wherein the hard coat layer includes:
a first region covering the decorative portion; and
a second region covering the non-decorative portion, and
wherein the first region has a pencil hardness equal to or higher than H.

3. The decorative conductive film according to claim 1 or 2, wherein the conductive layer has a sheet resistance value of from 10 Ω/sq. to 1,000 92/sq.

4. The decorative conductive film according to any one of claims 1 to 3,
wherein the decorative conductive film has a thickness of from 50 µm to 500 µm, and
wherein the decorative film has a total light transmittance in a thickness direction (excluding a position at which the decorative layer is provided) equal to or higher than 80%.

5. A resistance film type touch panel, comprising:
an upper electrode including the decorative conductive film of any one of claims 1 to 4;
a lower electrode; and
a frame configured to separate the upper electrode and the lower electrode from each other.

6. An electronic device, comprising the resistance film type touch panel of claim 5.
